# EUROPEAN PATENT APPLICATION

(11) **EP 4 825 191 A1**
(43) Date of publication of application: **21.10.2026**
(21) Application number: 24903913.2
(22) Date of filing: 30.09.2024
(51) Int. Cl.: A24B 15/18, B01J 13/02, A24D 3/02, A24D 3/06, A24D 1/20

(54) **NICOTINE GRANULES COMPRISING CAPSULES, METHOD FOR MANUFACTURING SAME, AND AEROSOL-GENERATING ARTICLE COMPRISING SAME**

(30) Priority: 15.12.2023 KR 20230183706
(71) Applicant: KT&G Corporation, Daedeok-gu Daejeon 34337 (KR)
(72) Inventor: CHOI, Sang Won, Daejeon 34128 (KR); KIM, Dong Hyun, Daejeon 34128 (KR); PARK, Joon Young, Daejeon 34128 (KR); PARK, Chang Jin, Daejeon 34128 (KR)
(74) Representative: AWA Sweden AB
(86) International application number: PCT/KR2024/014836
(87) International publication number: WO 2025/127342

(57) **Abstract**

According to an embodiment of the present invention, nicotine granules with a core-shell structure and a method for manufacturing same are provided wherein the core includes a capsule containing a basic solution and the shell contains a nicotine raw material.

## Description

### TECHNICAL FIELD

One or more embodiments relate to a nicotine granule including a capsule, a manufacturing method thereof, and an aerosol generating article including the same.

### BACKGROUND ART

Recently, demands for alternative articles to traditional cigarettes have increased. For example, there is an increasing demand for a device (e.g., a cigarette-type electronic cigarette) that generates an aerosol by electrically heating a cigarette stick. Accordingly, research on an electrically heated aerosol generating device and a cigarette stick (or an aerosol generating article) applied thereto is being conducted. For example, Korean Laid-open Patent Publication No. 10-2017-0132823 discloses a non-combustion flavor inhaler, a flavor source unit, and an atomizing unit.

### DISCLOSURE OF THE INVENTION

### TECHNICAL GOALS

Embodiments provide a method of manufacturing a nicotine granule and a nicotine granule formed thereby, which may save the time for a granule seed manufacturing process and reduce the production time and cost of granules.

Embodiments provide an aerosol generating article and an aerosol generating system including the same, which may increase the amount of nicotine transferred according to selection of a consumer and selectively provide a variety of taste intensities with a single aerosol generating article.

### TECHNICAL SOLUTIONS

According to an aspect, there is provided a nicotine granule having a core-shell structure, wherein the core includes a capsule including a base solution, and the shell includes a nicotine raw material.

According to another aspect, there is provided an aerosol generating article including a medium portion, and at least one filter portion, wherein the medium portion includes the nicotine granule described above.

According to still another aspect, there is provided a method of manufacturing a nicotine granule including a capsule, the method including a capsule manufacturing step S10 of manufacturing a capsule including a base solution inside, a hardening step S20 of hardening the capsule, and a granule formation step S30 of spraying a nicotine raw material on outside of the capsule manufactured in the hardening step.

### EFFECTS OF THE INVENTION

A method of manufacturing a nicotine granule according to an embodiment of the present disclosure omits and replaces a seed forming process for making beads without an adhesive of the related art, thereby reducing the production time and cost of granules, easily increasing the amount of nicotine transferred by rubbing the granules according to the consumer's choice by including the base solution in the manufactured nicotine granule, and selectively providing various taste intensities with a single aerosol generating article.

An aerosol generating article and an aerosol generating system including the same according to an embodiment may not heat the aerosol generating article and may minimize instability due to free nicotine due to pH adjustment.

In addition, the aerosol generating article may be used immediately without preheating the device, sufficient nicotine transfer may be ensured even in a non-heating mode to satisfy user's smoking satisfaction, and the service life of the device may be expected to increase as it is used in non-heating mode.

It should be understood that the effects of the present disclosure are not limited to the above-described effects, but are construed as including all effects that may be inferred from the configurations and features described in the following description or claims of the present disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a flowchart illustrating a method of manufacturing a nicotine granule according to an embodiment;
FIG. 2 is a diagram schematically illustrating a structure of an aerosol generating article according to an embodiment; and
FIG. 3 is a diagram schematically illustrating an aerosol generating system in which an aerosol generating article is coupled to an aerosol generating device according to an embodiment.

### MODE FOR CARRYING OUT THE INVENTION

Hereinafter, embodiments will be described in detail with reference to the accompanying drawings. However, various alterations and modifications may be made to the embodiments and thus, the scope of the disclosure is not limited or restricted to the embodiments. The equivalents should be understood to include all changes, equivalents, and replacements within the idea and the technical scope of the disclosure.

The terminology used herein is for the purpose of describing particular embodiments only and is not to be limiting of the embodiments. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, the terms first, second, A, B, (a), and (b) may be used to describe constituent elements of the embodiments. These terms are used only for the purpose of discriminating one component from another component, and the nature, the sequences, or the orders of the components are not limited by the terms. It should be noted that if it is described that one component is "connected", "coupled", or "joined" to another component, a third component may be "connected", "coupled", and "joined" between the first and second components, although the first component may be directly connected, coupled, or joined to the second component.

A component, which has the same common function as a component included in any one embodiment, will be described by using the same name in other embodiments. Unless disclosed to the contrary, the description of any one embodiment may be applied to other embodiments, and the specific description of the repeated configuration will be omitted.

In the following embodiments, a "humectant" may refer to a substance that facilitates the formation of visible smoke and/or an aerosol. Examples of humectant may include glycerin (GLY), propylene glycol (PG), ethylene glycol, dipropylene glycol, diethylene glycol, triethylene glycol, tetraethylene glycol, and oleyl alcohol, but are not limited thereto. In the art, a humectant may be used interchangeably with a term such as an aerosol former, a moisturizing agent, or the like.

In the following embodiments, an "aerosol forming substrate" may refer to a material capable of forming an aerosol. The aerosol may include a volatile compound. The aerosol forming substrate may be a solid or a liquid. For example, the solid aerosol forming substrate may include solid materials based on tobacco raw materials such as cut tobacco leaves, tobacco granules, or reconstituted tobacco. The reconstituted tobacco may be divided into slurry-like reconstituted tobacco sheets and paper-like reconstituted tobacco sheets according to a manufacturing method thereof. The liquid aerosol forming substrate may include a liquid composition material based on nicotine, tobacco extracts, and/or various flavoring agents. However, the scope of the disclosure is not limited to these examples.

In the following embodiments, an "aerosol generating article" is an article that accommodates an aerosol forming substrate, that is, a medium, and may refer to an article through which an aerosol passes so that nicotine contained in the medium is transferred. A representative example of an aerosol generating article may be a cigarette, but the scope of the disclosure is not limited thereto.

In the following embodiments, an "aerosol generating device" may refer to a device that generates an aerosol using an aerosol forming substrate to generate an aerosol that may be inhaled through the mouth of a user directly to the lungs of the user.

In the following embodiments, the term "upstream" or "upstream direction" may refer to a direction away from the mouth of a user (smoker), and the term "downstream" or "downstream direction" may refer to a direction approaching the mouth of the user. The terms "upstream" and "downstream" may be used to describe relative positions of components constituting an aerosol generating article.

In the following embodiments, the term "puff" refers to inhalation by a user, and the inhalation refers to a situation in which a user draws in an aerosol into his or her oral cavity, nasal cavity, or lungs through the mouth or nose.

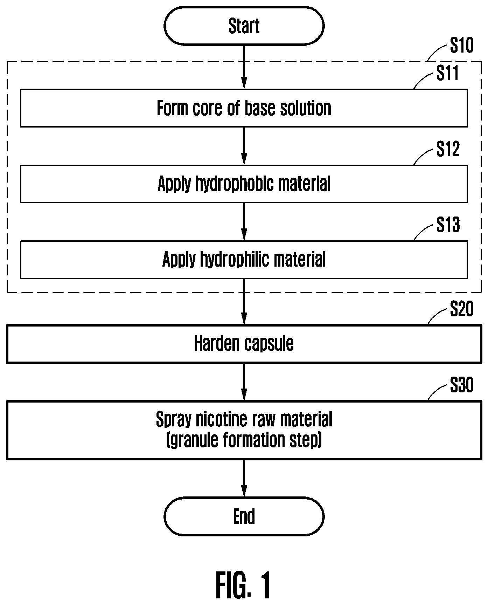

FIG. 1 is a flowchart illustrating a method of manufacturing a nicotine granule according to an embodiment.

Referring to FIG. 1, a method of manufacturing a nicotine granule according to an embodiment of the disclosure may include capsule manufacturing step S10 of manufacturing a capsule, hardening step S20 of hardening the manufactured capsule, and granule formation step S30 of forming a granule using the hardened capsule.

According to such a configuration, nicotine granules may be efficiently manufactured without a seed formation process which takes a long time in granule manufacturing using a fluidized bed facility, and therefore, the manufacturing time and cost of the granules may be reduced.

Describing each configuration, first, capsule manufacturing step S10 of the present embodiment is a step of forming a core (capsule) that envelops a base solution in a nicotine granule having a core-shell structure, and may include step S11 of forming a core of the base solution, step S12 of applying a hydrophobic material, step S13 of applying a hydrophilic material, and the like.

First, step S11 of forming a core of a base solution may be a step of forming a spherical core by putting base solution microspheres into a low-temperature liquid such as liquid nitrogen and cooling the base solution by the low-temperature liquid. At this time, the time during which the base solution is immersed in the low-temperature liquid may be about 5 seconds to about 15 seconds, and a spherical core may be formed in a most excellent manner when the time is in the above range. Meanwhile, the base solution used in forming the core may include at least one of potassium carbonate (K₂CO₃), sodium bicarbonate (NaHCO₃), and calcium oxide (CaO), and the material included in the base solution is not limited to the examples described above.

Step S12 of applying the hydrophobic material may be a step of putting the previously formed core of the base solution to the hydrophobic material to apply the hydrophobic material to cover the entire surface of the core. The hydrophobic material may directly contact with the base solution described above, and therefore, the hydrophobic material is not particularly limited as long as it may withstand the base solution and may be well attached to the surface of the core. Specific examples thereof may include one or more selected from a group consisting of paraffin wax, embed, crystal palm, multi-wax, carnauba wax, candelia wax, castor wax, microcrystalline wax, gel wax, beeswax, stearic acid, and polyethylene wax. In addition, a composition and a mixing ratio of the hydrophobic material may vary depending on the selection of the base solution. The hydrophobic material may be contained in a container at a temperature of about 80 degrees Celsius to about 140 degrees Celsius, and the core may be put into the container to apply the hydrophobic material onto the surface of the core. In the range described above, the hydrophobic material may be attached onto the surface of the core in a most excellent manner. The time for which the core is immersed in the hydrophobic material may be about 0.5 seconds to about 3 seconds, and in such a range, the hydrophobic material may be attached onto the surface of the core in a most excellent manner.

Then, step S13 of applying a hydrophilic material may be a step of putting the previously formed core coated with the hydrophobic material to the hydrophilic material to apply the hydrophilic material to cover the entire surface of the applied hydrophobic material. The hydrophilic material is not particularly limited as long as it may be well attached to the surface of the hydrophobic material and enable a nicotine raw material slurry to be described below to be well laminated. Specific examples thereof may include one or more selected from a group consisting of sodium alginate, carrageenan, gelatin, agar, and gum. In addition, the properties of the applied hydrophilic material may be controlled depending on a composition and a mixing ratio of the hydrophilic material. The hydrophilic material may be contained in a container at room temperature, and the core coated with the hydrophobic material may be put into the container to apply the hydrophilic material. In such a temperature range, the hydrophilic material may be attached onto the surface of the hydrophobic material in a most excellent manner. The time for which the core coated with the hydrophobic material is immersed in the hydrophilic material may be about 0.5 seconds to about 10 seconds, and in such a range, the hydrophilic material may be attached onto the surface of the hydrophobic material in a most excellent manner.

Through the capsule manufacturing step as described above, it is possible to manufacture a seed capable of forming an initial capsule, that is, a nicotine granule. That is, through this, it is possible to easily obtain an initial capsule having a size of 30 mesh or less, that is, a size of about 595 µm or more, as a seed capable of forming a nicotine granule, without using an adhesive. By manufacturing the initial capsule having the size described above, the manufacturing time and cost of the granules may be reduced more effectively.

In addition, as described above, since the base solution is contained inside the capsule, a medium portion including the nicotine granule formed therefrom may be rubbed to cause a reaction inside the granule, thereby maximizing the amount of nicotine transferred. If a user wishes to use it without maximizing the amount of nicotine transferred, there is an advantage in that the user may select and control the amount of nicotine transferred by simply using it without rubbing the medium portion.

Meanwhile, according to an embodiment of the present disclosure, hardening step S20 is a step of hardening the capsule manufactured in capsule manufacturing step S10, and may harden the capsule using ethanol or the like. Through this, a capsule with a desired hardness may be obtained, and the capsule may also be prevented from absorbing moisture.

Granule formation step S30 according to an embodiment of the present disclosure is a step of spraying a nicotine raw material on the outside of the capsule using the capsule that has undergone the hardening step as a seed, and the nicotine raw material may be formed by pulverizing leaf tobacco.

Specifically, it includes a process of spraying a slurry obtained by pulverizing leaf tobacco containing nicotine on an outer surface of the capsule to stack the nicotine raw material on the surface of the capsule and increase the size of the granule, and the nicotine raw material, and the like stacked on the surface of the capsule in this way may form a shell in a core-shell structure. Thereafter, it is possible to obtain nicotine granules having a desired size through a process of selecting the size.

Meanwhile, by additionally spraying the base solution onto the outer surface of the completed nicotine granule, a pH-treated nicotine granule having a pH of 7.0 or more and 9.5 or less may be formed. By performing the pH treatment as described above, free nicotine (gaseous nicotine) may be transferred from a medium substrate even under non-heating conditions or relatively low temperature conditions. That is, by adjusting the pH of the nicotine granule in the medium portion to a range of 7.0 or more and 9.5 or less, volatile free nicotine may be transferred under non-heating conditions, and a sufficient level of smoking taste intensity may be implemented.

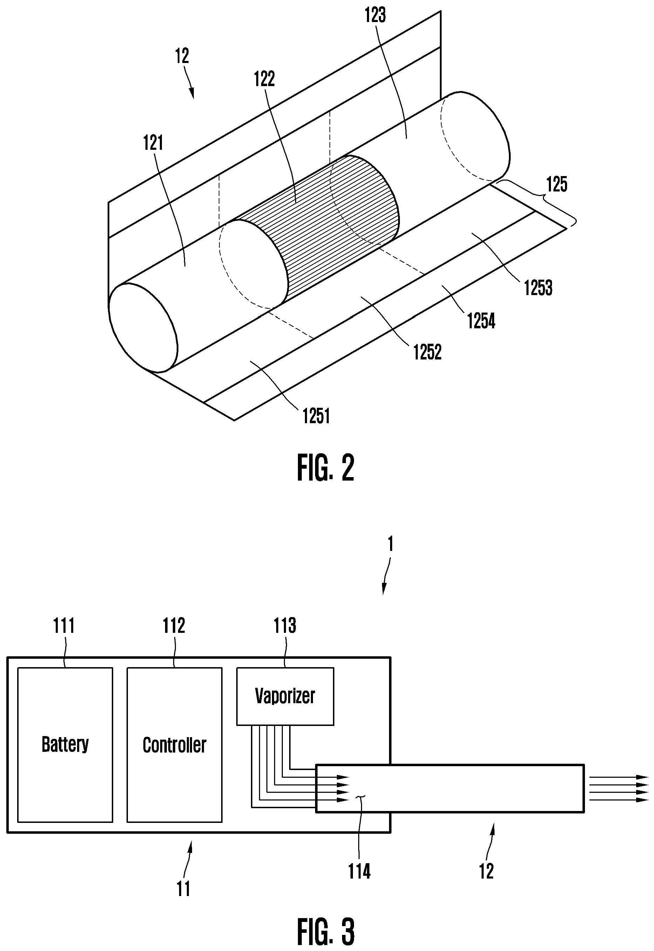

FIG. 2 is a diagram schematically illustrating a structure of an aerosol generating article according to an embodiment.

The nicotine granule manufactured according to an embodiment of the present disclosure may be included in a medium portion, and may finally be included in an aerosol generating article including the medium portion and one or more filter portions.

Referring to FIG. 2, an aerosol generating article 12 according to an embodiment may include a medium portion 122, a first filter portion 121, a second filter portion 123, and a wrapper 125.

In an embodiment, the aerosol generating article 12 may be packaged by at least one wrapper 125. At least one hole, through which external air is introduced or internal gas is discharged, may be formed in the wrapper. The wrapper 125 may contain a material having high thermal conductivity.

For example, the first filter portion 121 may be wrapped by a first wrapper 1251, the medium portion 122 may be wrapped by a second wrapper 1252, and the second filter portion 123 may be wrapped by a third wrapper 1253. Also, the entire aerosol generating article 12 may be repackaged by a fourth wrapper 1254.

In an embodiment, the first wrapper 1251, the second wrapper 1252, and the third wrapper 1253 may be formed of porous paper. For example, a porosity of each of the first wrapper 1251, the second wrapper 1252, and the third wrapper 1253 may be 35,000 CU, but is not limited thereto. In addition, a thickness of each of the first wrapper 1251, the second wrapper 1252, and the third wrapper 1253 may be within a range of 70 µm to 80 µm. In addition, a basis weight of each of the first wrapper 1251, the second wrapper 1252, and the third wrapper 1253 may be within a range of 20 g/m² to 25 g/m².

For example, the second wrapper 1252 may contain an aluminum component. For example, the second wrapper 1252 may be a combination of a metal foil such as an aluminum foil and general filter paper. In addition, the second wrapper 1252 may be formed of sterilized paper (MFW).

In an embodiment, the third wrapper 1253 may be formed of PLA laminate. Here, the PLA laminate refers to three-ply paper including a paper layer, a PLA layer, and a paper layer. For example, the thickness of the third wrapper 1253 may be within a range of 100 µm to 120 µm. In addition, the basis weight of the third wrapper 1253 may be within a range of 80 g/m² to 100 g/m².

In an embodiment, the fourth wrapper 1254 may be formed of sterile paper (MFW). For example, a basis weight of the fourth wrapper 1254 may be within a range of 57 g/m² to 63 g/m². In addition, a thickness of the fourth wrapper 1254 may be within a range of 64 µm to 70 µm.

In an embodiment, the first filter portion 121 may be composed of a cellulose acetate filter. In addition, the first filter portion 121 may be composed of a paper filter, a porous molded material, and the like. For example, a length of the first filter portion 121 may be 4 to 15 mm, but is not limited thereto. In addition, the first filter portion 121 may be colored and flavored.

In an embodiment, the medium portion 122 may include a cavity, and the cavity may be filled with a medium. For example, a medium substrate filled in the medium portion 122 may include the nicotine granules manufactured by the method of manufacturing the nicotine granule described in detail above. For example, a length of the medium portion 122 may be adopted as an appropriate length within a range of 6 mm to 18 mm, but is not limited thereto.

In general, since nicotine granule has a significantly lower content of moisture and/or aerosol forming agent than other types of tobacco materials (e.g., cut tobacco, reconstituted tobacco, etc.), it is possible to significantly reduce visible smoke generation, and thus, a smokeless function of an aerosol generating device 11 may be easily implemented. However, a diameter, a density, a filling ratio, a composition ratio of constituent materials, a heating temperature, and the like of the nicotine granule may vary, and these may vary depending on the embodiment. The diameter of the nicotine granule may be about 0.3 mm to 1.2 mm. In such a numerical range, the appropriate hardness and ease of manufacturing of the tobacco granules may be ensured, and the probability of eddy current generation within the cavity may be increased.

In addition, the medium portion 122 may contain an aerosol generating material such as glycerin, or the like. In addition, the medium portion 122 may contain other additives such as a flavoring agent, a humectant, and/or organic acid. Also, a flavoring liquid such as menthol or a humectant may be added to the medium portion 122 by spraying it onto the medium portion 122.

In an embodiment, the medium in the medium portion 122 may include the pH-treated nicotine granule. For example, the nicotine granule may be pH-treated to have alkalinity by a pH adjusting agent such as a base solution, and may contain at least one of potassium carbonate (K₂CO₃), sodium bicarbonate (NaHCO₃), and calcium oxide (CaO). However, the materials contained in the pH adjusting agent are not limited to the examples described above, and a material that generate less negative odor during smoking may be used. A pH adjusting agent such as a base solution may increase the pH of the medium substrate included in the medium portion 122. Compared to a medium substrate that is not treated with the pH adjusting agent such as the base solution, the medium substrate including base pH-treated nicotine granules increases the amount of nicotine released when heated. That is, in a case of a base pH-treated medium substrate, a sufficient nicotine yield may be achieved even when the medium portion 122 is heated at a low temperature.

In an embodiment, the pH of the nicotine granule may be adjusted to range of 7.0 to 9.5. By performing the pH treatment in this manner, free nicotine may be transferred from the medium substrate even under non-heating conditions or relatively low temperature conditions. That is, by adjusting the pH of the medium substrate of the medium portion 122 to a range of 7.0 to 9.5, volatile free nicotine may be transferred under non-heating conditions, and a sufficient level of smoking taste intensity may be implemented.

In an embodiment, the first filter portion and/or the second filter portion may be manufactured from a cellulose acetate filter portion, and may additionally include a plasticizer such as triacetin (TA) or triethyl citrate (TEC). Through this, free nicotine of the medium portion may be adsorbed to at least one of the first filter portion and the second filter portion.

In an embodiment, a tube filter may be coupled to a downstream side of the medium portion 122 of the aerosol generating article 12.

FIG. 3 is a diagram schematically illustrating an aerosol generating system in which an aerosol generating article is coupled to an aerosol generating device according to an embodiment.

Referring to FIG. 3, an aerosol generating system 1 according to an embodiment may include the aerosol generating device 11 and the aerosol generating article 12.

Referring to FIG. 3, the aerosol generating device 11 according to an embodiment may include a battery 111, a controller 112, a vaporizer 113, and an elongated cavity 114.

The aerosol generating device 11 shown in FIG. 3 only illustrates components related to the embodiment. Therefore, it may be understood by those skilled in the art related to the embodiment that other general components may be further included in the aerosol generating device 11 in addition to the components shown in FIG. 3. In addition, the aerosol generating device 11 may be in the form of a stick or a holder.

In an embodiment, the battery 111 may supply power used to operate the aerosol generating device 11. For example, the battery 111 may supply a current to the vaporizer 113 so that the vaporizer 113 may heat a liquid composition. In addition, the battery 111 may supply power required to operate a display, a sensor, a motor, etc. installed in the aerosol generating device 11.

In an embodiment, the battery 111 may be a lithium iron phosphate (LiFePO₄) battery, but is not limited to the example. For example, the battery 111 may correspond to a lithium cobalt oxide (LiCoO₂) battery, a lithium titanate battery, and a lithium ion battery.

For example, the battery 111 may have a shape of a cylinder with a diameter of 10 mm and a length of 37 mm, but is not limited thereto. For example, a capacity of the battery 111 may have a range of 120 mAh to 250 mAh, but is not limited thereto. In addition, the battery 111 may be a rechargeable battery or a disposable battery. For example, when the battery 111 is rechargeable, a charge rate (C-rate) of the battery 111 may be 10 C, and a discharge rate (C-rate) may be 10 C to 20 C, but is not limited thereto. In addition, for static use, the battery 111 may be manufactured so that 80% or more of a total capacity may be secured even when the charging/discharging are performed 2000 times.

In an embodiment, the controller 112 controls the overall operation of the aerosol generating device 11. Specifically, the controller 112 controls operations of other components included in the aerosol generating device 11 in addition to the operations of the battery 111 and the vaporizer 113. In addition, the controller 112 may confirm a state of each component of the aerosol generating device 11 to determine whether the aerosol generating device 11 is in an operable state.

In an embodiment, the controller 112 includes at least one processor. The processor may be implemented as an array of a plurality of logic gates, or may be implemented as a combination of a general-purpose microprocessor and a memory storing a program executable by the microprocessor. It may also be understood by those skilled in the art that the processor may be implemented as other types of hardware.

In an embodiment, the vaporizer 113 may heat a liquid composition to generate an aerosol, and may emit the generated aerosol toward the aerosol generating article 12 inserted into the elongated cavity 114 so that the generated aerosol passes through the inserted aerosol generating article 12. Accordingly, the aerosol passing through the aerosol generating article 12 may be added with a tobacco flavor, and a user may inhale the aerosol added with the tobacco flavor by inhaling one end of the aerosol generating article 12 with the mouth. In an embodiment, the vaporizer 113 may be referred to as a cartomizer or an atomizer. In an embodiment, the vaporizer 113 may be coupled to the aerosol generating device 11 so as to be replaceable.

In an embodiment, the aerosol generating device 11 may further include a heater. According to an embodiment, the aerosol generating article 12 may transfer nicotine even under non-heating conditions. In addition, in a low-temperature heating mode using a heater, the transfer of nicotine may be promoted to increase the amount of nicotine transferred. The low-temperature heating mode using a heater may achieve a higher level of smoking taste intensity than a non-heating mode, and the amount of nicotine transferred may be easily controlled through the non-heating mode and the low-temperature heating mode.

The heater may be heated by power supplied from the battery 111. For example, when the aerosol generating article 12 is inserted into the aerosol generating device 11, the heater may be positioned outside the aerosol generating article 12. Accordingly, the heated heater may increase a temperature of an aerosol generating material in the aerosol generating article 12.

For example, the heater may be an electrical resistance heater. For example, the heater may include an electrically conductive track, and the heater may be heated as a current flows through the electrically conductive track. However, the heater is not limited to the examples described above, and any heater may be used without limitation as long as it may be heated to a desired temperature. Here, the desired temperature may be preset in the aerosol generating device 11 or may be set to a desired temperature by a user.

Meanwhile, in another example, the heater may be an induction-heating heater. Specifically, the heater may include an electrically conductive coil for inductively heating the aerosol generating article 12, and the aerosol generating article 12 may include a susceptor that may be heated by the induction-heating heater.

For example, the heater may include a tubular heat transfer element, a plate-shaped heat transfer element, a needle-shaped heat transfer element, or a rod-shaped heat transfer element, and may heat the inside or outside of the aerosol generating article 12 depending on the shape of the heat transfer element.

In addition, a plurality of heaters may be arranged in the aerosol generating device 11. At this time, the plurality of heaters may be arranged to be inserted into the inside of the aerosol generating article 12 or may be arranged outside the aerosol generating article 12. In addition, some of the plurality of heaters may be arranged to be inserted into the inside of the aerosol generating article 12 and the rest may be arranged outside the aerosol generating article 12.

In an embodiment, the elongated cavity 114 may accommodate the aerosol generating article 12. In an embodiment, the heater may be arranged to surround an outer surface of the elongated cavity 114 to heat an aerosol generating article accommodated in the elongated cavity 114. In an embodiment, the heater may be arranged to surround at least a portion of the outer surface of the elongated cavity 114.

Meanwhile, the aerosol generating device 11 may further include general-purpose components in addition to the battery 111, the controller 112, the vaporizer 113, and the elongated cavity 114. For example, the aerosol generating device 11 may include a sensor, an output unit, a user input unit, a memory, and a communicator.

According to an embodiment, the aerosol generating device 11 may include the vaporizer 113 and the elongated cavity 114 arranged in series or in parallel.

Referring to FIG. 3, through an airflow path in the aerosol generating device 11, an aerosol generated by the vaporizer 113 may be introduced to the elongated cavity 114 and pass through the aerosol generating article 12. Accordingly, a tobacco flavor or nicotine may be added to the aerosol that passed through the aerosol generating article 12, and a user may inhale the aerosol added with the tobacco flavor or nicotine by inhaling one end of the aerosol generating article 12 through the mouth.

The vaporizer 113 according to an embodiment may include a liquid storage, a liquid transfer unit, a heating element, and an airflow path. Each component of the vaporizer 113 may be formed of a material of poly carbonate, but is not limited thereto.

In an embodiment, the liquid storage may store a liquid composition that may generate an aerosol when heated. According to an embodiment, the liquid composition may be a liquid containing a tobacco-containing material including a volatile tobacco flavoring component, and according to another embodiment, the liquid composition may be a liquid containing a non-tobacco material. In addition, the liquid composition may store a liquid having a volume of 0.1 to 2.0 mL, but is not limited thereto. Also, the liquid storage may be interchangeably coupled within the vaporizer 113.

For example, the liquid composition may contain water, ethanol, plant extracts, a flavoring agent, flavoring material, or a vitamin mixture. The flavoring agent may include menthol, peppermint, spearmint oil, various fruit flavoring components, etc., but is not limited thereto. The flavoring agent may include a component that may provide a variety of flavors or tastes to a user. The vitamin mixture may be a mixture of at least one of vitamin A, vitamin B, vitamin C, and vitamin E, but is not limited thereto. In addition, the liquid composition may include an aerosol forming agent, such as glycerin and propylene glycol.

In an embodiment, the liquid transfer unit may transfer the liquid composition in the liquid storage to the heating element. In an embodiment, the liquid transfer unit may be a wick, such as cotton fibers, ceramic fibers, glass fibers, or porous ceramic, which may utilize capillary action to transfer the liquid composition in the liquid storage to the heating element.

In an embodiment, the heating element is an element for heating the liquid composition transferred by the liquid transfer unit, which may be a metal heating wire, a metal heating plate, a ceramic heater, or the like. In addition, the heating element may be composed of a conductive filament such as a nichrome wire, and may be arranged in a structure that is wound around the liquid transfer unit. The heating element may be heated by supplying a current, and may transfer heat to a liquid composition in contact with the heating element, thereby heating the liquid composition. As a result, an aerosol may be generated.

In an embodiment, the airflow path may be arranged such that the generated aerosol is emitted toward the inserted aerosol generating article 12. That is, the aerosol generated by the heating element may be emitted through the airflow path.

In an embodiment, the controller 112 may control a temperature of the heating element by controlling the current supplied to the heating element. Accordingly, the controller 112 may control the amount of aerosol generated from the liquid composition by controlling the current supplied to the heating element. In addition, the controller 112 may control to supply the current to the heating element for a preset time when a user's puff is detected. For example, the controller 112 may control to supply the current to the heating element for 1 to 5 seconds from the time the user's puff is detected.

In an embodiment, the controller 112 may control the amount of aerosol emitted from the vaporizer 113 by controlling opening and closing states of the airflow path. Specifically, the controller 112 may increase the size of a void in the airflow path to increase the amount of aerosol emitted from the vaporizer 113, and may reduce the size of the void in the airflow path to reduce the amount of aerosol emitted from the vaporizer 113. For example, the controller 112 may control the void of the airflow path using a dial method.

In an embodiment, when the amount of the liquid composition of the liquid storage is less than a preset amount, the controller 112 may notify information indicating that the liquid composition is insufficient to the user through a vibration motor or a display.

In an embodiment, the controller 112 may control the temperature at which the heater heats the aerosol generating article 12. For example, the controller 112 may control the temperature at which the heater heats a medium portion.

In an embodiment, the controller 112 may control the heater between a non-heating mode and a low-temperature heating mode. In the non-heating mode, the heater may not heat the aerosol generating article 12, and at this time, the medium portion may not be heated. In the low-temperature heating mode, the heater may heat the aerosol generating article 12 at a low temperature of 0 degrees or higher and 150 degrees or lower. At this time, the medium portion may be heated at a low temperature of 0 degrees or higher and 150 degrees or lower.

As the aerosol generating article 12 switches between the non-heating mode and the low-temperature heating mode, the smoking taste intensity may be controlled. In the non-heating mode, the amount of nicotine transferred from the medium portion may be relatively low, and thus, the smoking taste intensity may be relatively low. In the low-temperature heating mode, compared to the non-heating mode, the amount of nicotine transferred from the medium portion may be relatively high, and thus, the smoking taste intensity may be relatively high. Therefore, in the low-temperature heating mode, sufficient smoking taste intensity may be secured even without treating the pH of the medium portion to a high level.

The descriptions of the above-described embodiments are merely examples, and it will be understood by one of ordinary skill in the art that various changes and equivalents may be made thereto. Therefore, the scope of the disclosure should be defined by the appended claims, and all differences within the scope equivalent to those described in the claims will be construed as being included in the scope of protection defined by the claims.

The features and aspects of any embodiment(s) described above may be combined with features and aspects of any other embodiment(s) without resulting in apparent technical conflicts.

## Claims

1. A nicotine granule having a core-shell structure, wherein
the core comprises a capsule comprising a base solution, and
the shell comprises a nicotine raw material.

2. The nicotine granule of claim 1, wherein an inner surface of a membrane of the capsule is formed of a hydrophobic material.

3. The nicotine granule of claim 1, wherein an outer surface of a membrane of the capsule is formed of a hydrophilic material.

4. The nicotine granule of claim 1, wherein the capsule has a size of 30 mesh or less.

5. An aerosol generating article comprising:
a medium portion; and
at least one filter portion,
wherein the medium portion comprises the nicotine granule of claim 1.

6. The aerosol generating article of claim 5, wherein the nicotine granule comprise a nicotine granule that is pH-treated to have a pH of 7.0 or more and 9.5 or less.

7. The aerosol generating article of claim 5, wherein, to the filter portion, free nicotine released from the medium portion is transferred and adsorbed.

8. The aerosol generating article of claim 5, further comprising:
a tube filter on a downstream side of the medium portion.

9. The aerosol generating article of claim 5, wherein the filter portion comprises cellulose acetate (CA), and comprises at least one plasticizer selected from a group consisting of triacetin and triethyl citrate (TEC).

10. A method of manufacturing a nicotine granule comprising a capsule, the method comprising:
a capsule manufacturing step S10 of manufacturing a capsule comprising a base solution inside;
a hardening step S20 of hardening the capsule; and
a granule formation step S30 of spraying a nicotine raw material on outside of the capsule manufactured in the hardening step.

11. The method of claim 10, wherein the capsule manufacturing step S10 comprises:
step S11 of forming a core of the base solution;
step S12 of applying a hydrophobic material on outside of the core; and
step S13 of applying a hydrophilic material on the outside of the core coated with the hydrophobic material.

12. The method of claim 10, further comprising:
step of spraying the base solution onto the granule manufactured from the granule formation step.

13. The method of claim 10, wherein the capsule has a size of 30 mesh or less.

14. The method of claim 10, wherein the nicotine raw material is formed by pulverizing leaf tobacco.

15. The method of claim 10, wherein the granule formation step comprises a process of increasing a size of the granule by laminating a tobacco medium raw material onto the capsule in a fluidized bed granulator.
